# EUROPÄISCHE PATENTANMELDUNG

(11) **EP 2 093 448 A2**
(43) Veröffentlichungstag der Anmeldung: **26.08.2009**
(21) Anmeldenummer: 09000920.0
(22) Anmeldetag: 23.01.2009
(51) Int. Cl.: F16D 25/12, F16D 48/02

(54) **Schaltsystem**

(30) Priorität: 21.02.2008 DE 102008010303
(71) Anmelder: Voith Patent GmbH, 89522 Heidenheim (DE)
(72) Erfinder: Busch, Jörg, Dr., 89551 Königsbronn-Zang (DE)
(74) Vertreter: Dr. Weitzel & Partner

(57) **Zusammenfassung**

Die Erfindung betrifft ein Schaltsystem (34)
- mit mindestens einem Schaltelement (2) und einer diesem zugeordneten Betätigungsvorrichtung (1);
- mit einem dem Schaltelement (2) zugeordneten Schmiermittelversorgungssystem (3);
- die Betätigungsvorrichtung umfasst mindestens ein Betätigungselement (4), welches mit Schaltdruck beaufschlagbar ist und ein druckmittelbetätigtes Rückstellsystem (11), umfassend mindestens eine Rückstellkammer (14) für das Betätigungselement (4),

wobei
- die Rückstellkammer (18) des Rückstellsystems (11) ist mit dem Schmiermittelversorgungssystem (3) verbunden.

## Beschreibung

Die Erfindung betrifft ein Schaltsystem, im einzelnen mit den Merkmalen aus dem Oberbegriff des Anspruches 1.

Schaltsysteme, umfassend mindestens ein Schaltelement und eine entsprechende diesem zugeordnete Betätigungsvorrichtung sind in einer Vielzahl von Ausführungen aus dem Stand der Technik vorbekannt. Derartige Systeme finden Anwendung in Getrieben, insbesondere Automatgetrieben. Die Schaltelemente sind dabei vorzugsweise in Form von reibschlüssigen Schalteinrichtungen ausgeführt, die wenigstens zwei miteinander wenigstens mittelbar in Wirkverbindung bringbare Reibelemente umfassen. Zur Betätigung, das heißt Erzeugung der Wirkverbindung zum Zwecke der Leistungsübertragung über ein derartiges Schaltelement, ist eine Betätigungsvorrichtung vorgesehen, die ein reibschlüssiges Anlegen der einzelnen Elemente des einzelnen Schaltelementes ermöglicht. Die Betätigungsvorrichtung kann je nach Art der Betätigung unterschiedlich ausgeführt sein. Im Regelfall werden jedoch druckmittelbetätigte Schaltelemente zum Einsatz gelangen. Dies bedeutet, dass die Aktivierung über Druckmittel gesteuert erfolgt. Dazu ist ein Druckmittelsystem vorgesehen, welches dem einzelnen Schaltelement oder einer Vielzahl von Schaltelementen gemeinsam zugeordnet sein kann. Dieses ermöglicht die Beaufschlagung eines Betätigungselementes der Betätigungsvorrichtung. Das Betätigungselement selbst kann verschiedenartig ausgeführt sein, vorzugsweise in Form eines Kolbens, der in axialer Richtung gegenüber den miteinander in Wirkverbindung zu bringenden Elementen des Schaltelementes verschiebbar gelagert ist. Der Kolben ist dabei in einer Arbeitskammer geführt und mit dem in diese einbringbaren Druck, dem Schaltdruck, beaufschlagbar, so dass sich der Kolben gegenüber den miteinander in Wirkverbindung bringbaren Elementen des Schaltelementes unter Druckeinfluss bewegt und der Reibschluss erzeugt wird. Die Rückstellung erfolgt in der Regel über ein Rückstellsystem, wobei die Rückstellung vorzugsweise automatisch beim Abbau des Schaltdruckes erfolgt. Das Rückstellsystem kann dabei verschiedenartig ausgebildet sein. Denkbar sind mechanische und druckmittelbetätigte Lösungen. Im erstgenannten Fall wird beispielsweise auf eine Ausführung gemäß der Druckschrift DE 19855763 C1 verwiesen, bei welcher die Rückstellung über Federelemente erfolgt. Das Rückstellsystem umfasst in diesem Fall eine Mehrzahl von einzelnen Federelementen, die zwischen den miteinander in Wirkverbindung bringbaren Reibelementen angeordnet sind und bei Beaufschlagung des Betätigungselementes und Anpressen der Reibelemente aneinander unter Aufbau einer Vorspannung zusammengedrückt werden, die bei Abbau des Schaltdruckes am Betätigungselement zur Rückstellung der einzelnen Reibelemente durch Entspannung der Federelemente führt. Eine andere Möglichkeit besteht in der Nutzung einer hydraulischen Rückstellung. Bei dieser wird der Kolben über einen weiteren Kolbenraum, der entgegen der Betätigungsrichtung beim Anlegen des Schaltdruckes wirksam ist, mit Druckmittel beaufschlagt und darüber die Rückstellung bewirkt.

Die Betätigungssysteme werden unabhängig von der Ausführung der Schaltelemente eingesetzt. Den Schaltelementen ist ferner zur Gewährleistung der Funktionsweise ein Schmiermittelsystem zugeordnet. Dabei hat sich gezeigt, dass sich insbesondere im Moment der Betätigung des Kolbens, das heißt dem Schließen der beispielsweise als Lamellen ausgeführten Reibelemente eine erhöhte Belastung der Lamellen sowie der Lager, Gleitpaarungen etc. ergibt. Die vorhandene Schmiermittelversorgung, insbesondere bei gleichbleibender Schmiermittelversorgung, kann diesen Ansprüchen dabei nur ungenügend gerecht werden. Die Schmierung während der Betätigung des Kolbens, insbesondere während der Rutschphase, ist dabei besonders wichtig, da hier die einzelnen Bauelemente besonders belastet werden. Diese Spitzen können nur durch eine entsprechende Steuerung über die Ansteuerung der Einzelkomponenten des Schmiermittelsystems, insbesondere der Schmiermittelversorgung, ausgeglichen werden, was sich jedoch sehr aufwendig gestaltet und nicht unbedingt zeitnah passiert.

Der Erfindung liegt daher die Aufgabe zugrunde, ein Schaltsystem derart weiter zu entwickeln und zu verbessern, dass die genannten Nachteile vermieden werden. Insbesondere ist auf eine optimale Schmierung der entsprechenden, mit Schmiermittel zu versorgenden Elemente während der Betätigung der Betätigungseinrichtung, insbesondere der Rutschphase, abzustellen, die möglichst zeitnah und optimal an den Erfordernissen der Schmiermittelversorgung anknüpft. Die erfindungsgemäße Lösung soll sich dabei durch einen geringen konstruktiven sowie steuerungstechnischen Aufwand auszeichnen.

Die erfindungsgemäße Lösung ist durch die Merkmale des Anspruchs 1 charakterisiert. Vorteilhafte Ausgestaltungen sind in den Unteransprüchen wiedergegeben.

Ein Schaltsystem, umfassend mindestens ein Schaltelement und eine diesem zugeordnete Betätigungsvorrichtung und ein Schmiermittelversorgungssystem für die einzelnen, mit Schmiermittel zu versorgenden Elemente des Schaltsystems ist erfindungsgemäß dadurch charakterisiert, dass bei druckmittelbetätigter Ausführung der Betätigungsvorrichtung die Rückstellung ebenfalls über Druckmittel erfolgt, wobei die Rückstelleinrichtung, insbesondere die mit Druckmittel zu beaufschlagende Rückstellkammer, mit dem Schmiermittelsystem verbunden ist. Dadurch wird eine Erhöhung des Schmierdruckes, das heißt der Schmierölmenge während der Betätigung des Schaltkolbens durch Kopplung der hydraulischen Kolbenrückstellkammer mit dem Schmiersystem vorgenommen. Die Erhöhung des Schmierdrucks steht dabei immer in dem Moment der höchsten Belastung, das heißt der Aktivierung des Kolbens zur Verfügung. Die Schmierung wird somit im entscheidenden Moment verbessert. Dabei wird der Effekt ausgenutzt, dass das in der Rückstellkammer befindliche Druckmittel bei Belastung des Kolbens, das heißt Aufbau des Schaltdruckes, automatisch in das Schmiermittelsystem gedrückt wird.

Bezüglich der konkreten Ausführung bestehen eine Mehrzahl von Möglichkeiten. Im einfachsten Fall handelt es sich beim Betätigungselement, wie bereits ausgeführt, um einen Kolben, der eine am Schaltelement wirksam werdende Wirkfläche aufweist. Der Kolben ist in einer Kammer vorzugsweise unter Unterteilung dieser in eine Arbeits- und eine Rückstellkammer geführt, wobei die Führung vorzugsweise in axialer Richtung verschiebbar erfolgt. Im einfachsten Fall ist der Kolben dabei über Dichtelemente gegenüber der Kammerinnenwandung abgedichtet, wodurch die Arbeitskammer und die Rückstellkammer gebildet werden. Die Kammern werden dabei von der Innenwandung der Kammer und den zu beaufschlagenden Flächen des Kolbens mit Schaltdruck beziehungsweise mit Rückstelldruck gebildet. In Analogie gelten diese Aussagen auch für die Rückstellkammer. Die Rückstellkammer wird von zumindest einer entgegen der Beaufschlagungsfläche mit Arbeits- beziehungsweise Schaltdruck gerichteten Fläche sowie Außenflächen des Kolbens und der Innenwandung der Kammer begrenzt. Die Arbeitskammer ist mit einer Schaltdruckquelle gekoppelt, während die Rückstellkammer erfindungsgemäß mit dem Schmiermittelsystem verbunden ist. Dies erfolgt im einfachsten Fall über eine entsprechende Verbindungsleitung oder einen Kanal, der die Rückstellkammer mit einer Schmiermittelleitung zwischen den einzelnen Schmierstellen und der Schmiermitteldruckquelle des Schmiermittelsystems verbindet. Die Begriffe "Leitungen" und "Kanäle" sind dabei jeweils funktional zu verstehen. Die konkrete Ausführung erfolgt in Abhängigkeit des Einzelfalles. Erfindungsgemäß wird somit die Schmiermitteldruckquelle, die mit der Schmiermittelleitung gekoppelt ist, gleichzeitig auch als Druckquelle für das Rückstellsystem genutzt. Dies bedeutet, dass quasi das Rückstellsystem und das Schmiermittelsystem, insbesondere die Rückstelldruckmittelquelle und die Schmiermitteldruckquelle von einer baulichen Einheit gebildet werden.

Die erfindungsgemäße Lösung funktioniert wie folgt: Wird das Schaltelement mit Arbeits-, das heißt Schaltdruck beaufschlagt, wird die Arbeitskammer mit Druck beaufschlagt und damit die Beaufschlagungsseite des Kolbens. Dieser bewegt sich in Richtung der miteinander in Wirkverbindung zu bringenden Elemente des Schaltelementes, insbesondere der Reibelemente und presst diese zusammen. Dabei wird das in der Rückstellkammer vorhandene Druckmittel durch die Bewegung des Kolbens aus dieser herausgedrückt und in das Schmiermittelsystem hineingedrückt. Die Anbindung an das Schmiermittelsystem erfolgt dabei vorzugsweise unmittelbar vor den Schmierstellen oder an eine zentrale Versorgungsleitung, die mit den einzelnen Schmierstellen gekoppelt ist.

Wird der Kolben, das heißt das Betätigungselement, deaktiviert, indem der Schaltdruck abgebaut wird, gelangt Schmiermittel über die Verbindungsleitung aus dem Schmiermittelsystem in die Rückstellkammer und bewirkt eine automatische Rückstellung des Kolbens. Dies erfolgt automatisch. Zusätzlich können in den einzelnen Leitungen, insbesondere der Verbindungsleitungen und der Schmiermittelleitung, Mittel zur Steuerung des Druckes, insbesondere Drosseln vorgesehen werden.

Gemäß einer besonders vorteilhaften Weiterentwicklung ist zusätzlich eine Einrichtung zum Aufbringen beziehungsweise Bereitstelen eines Unterstützungsdruckes vorgesehen, welcher den Schmierdruck unterstützt. Dabei wird eine entsprechende Unterstützungsdruckbetriebsmittelquelle mit der Verbindungsleitung zwischen Rückstellkammer und der Schmiermittelversorgungsleitung gekoppelt. Dadurch kann ein möglichst gleichmäßiges Schmiermitteldruckniveau an den einzelnen Schmierstelen gewährleistet werden, wenn je nach Betriebspunkt unterschiedliche Schmierdrücke eingestellt werden muss.

Die einzelnen Druckmittel-Bereitstellungseinheiten, Schaltdruckmittel-Bereitstellungsquelle, Unterstützungsdruckmittel-Bereitstellungsquelle und Schmiermitteldruck-Bereitstellungsquelle können dabei von einer einzigen Einheit gebildet werden, die über eine entsprechende Verteileinrichtung mit den entsprechenden Leitungen beziehungsweise Kammern gekoppelt ist.

Gemäß einer besonders vorteilhaften Ausführung wird der Arbeitsdruck gesteuert. Die Steuerung kann dabei in ein Verfahren zur Einhaltung eines konstanten Schmiermitteldruckes integriert sein.

Die erfindungsgemäße Lösung wird nachfolgend anhand von Figuren erläutert. Darin ist im einzelnen folgendes dargestellt:
- Figur 1: verdeutlicht in schematisiert vereinfachter Darstellung den Grundaufbau eines erfindungsgemäß ausgeführten Schaltsystems;
- Figur 2: verdeutlicht eine Weiterentwicklung gemäß Figur 1 mit zusätzlicher Möglichkeit der Erzeugung eines Unterstützungsdruckes.

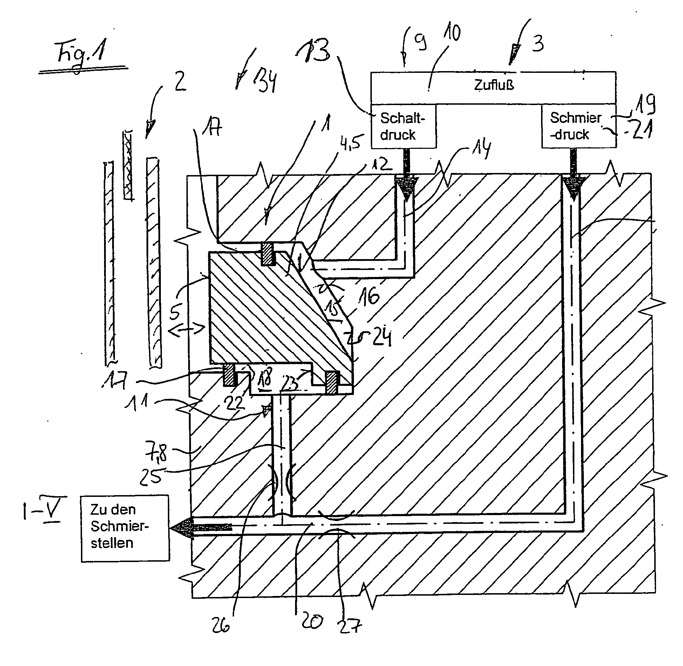

Die Figur 1 verdeutlicht in schematisiert vereinfachter Darstellung anhand eines Ausschnittes aus einem Axialschnitt eines Schaltsystems 34 eine Betätigungsvorrichtung 1 für ein Schaltelement 2, welches beispielsweise in Form einer reibschlüssigen Kupplung oder Bremseinrichtung, insbesondere Lamellenkupplung vorliegen kann, das Grundprinzip einer erfindungsgemäßen optimierten Schmierung. Demnach ist den einzelnen Schaltelementen, insbesondere einem einzelnen Schaltelement 2, ein

Schmiermittelversorgungssystem 3 zugeordnet, welches die einzelnen Bauteile mit Schmiermittel versorgt. Die mit Schmiermittel zu versorgenden Bauteile können beispielsweise die einzelnen Scheiben, insbesondere Lamellen sowie die Lager für das Schaltelement 2 sein. Die Betätigungsvorrichtung 1 ist als druckmittelbetätigte Betätigungsvorrichtung ausgeführt. Diese umfasst ein Betätigungselement 4, welches vorzugsweise in Form eines Kolbens 5 ausgeführt ist und der die miteinander in Wirkverbindung bringbare Elemente des Schaltelementes 2, insbesondere der Kupplungen oder Bremseinrichtungen, beaufschlagt. Der Kolben 5 weist eine Wirkfläche 6 auf, die mit den miteinander in Wirkverbindung zu bringenden Elementen des Schaltelementes 2 wenigstens mittelbar, vorzugsweise direkt zusammenwirken kann. Im Normalfall wird die Wirkfläche 6 direkt an einem Element des Schaltelementes 2, beispielsweise einer Lamelle, wirksam. Denkbar ist jedoch auch die indirekte Einwirkung. Diese ist dadurch charakterisiert, dass noch ein Zwischenelement vorgesehen ist. Der Kolben 5 ist dazu in einem Bauteil 7 in axialer Richtung bewegbar geführt. Bei dem Bauteil 7 kann es sich je nach Ausführung um ein ruhendes Bauteil oder aber auch ein rotierendes Bauteil handeln. Vorzugsweise wird das Bauteil 7 von einem ruhenden Bauteil 8 gebildet, welches vom Gehäuse oder einem anderen ortsfesten Element gebildet werden kann. Dem Betätigungselement 4, insbesondere dem Kolben 5, ist eine Betätigungseinrichtung 9 zugeordnet. Bei dieser handelt es sich vorzugsweise um ein Druckmittelsystem 10. Die Rückstellung des Betätigungselementes 4 erfolgt druckmittelbetätigt, das heißt hydraulisch oder pneumatisch. Dazu ist dem Betätigungselement 4, insbesondere dem Kolben 5, ein entsprechendes Rückstellsystem 11 zugeordnet. Erfindungsgemäß ist das Rückstellsystem 11 mit dem Schmiermittelsystem 3 gekoppelt. Damit wird der Kolben 5 durch Druck im Schmiermittelsystem 3, insbesondere dem Schmierdruck, zurückgestellt.

Das Druckmittelsystem 10 zur Beaufschlagung des Kolbens 5, insbesondere zur Beaufschlagung einer sogenannten Beaufschlagungsfläche 12 am Kolben 5, welche in der Regel entgegengesetzt zur gewünschten Betätigungsrichtung ausgerichtet ist, umfasst dazu mindestens eine Druckmittelquelle 13, die über entsprechende Leitungsverbindungen 14 mit einer als Druckkammer fungierenden Arbeitskammer 15 verbunden ist. Die Leitungsverbindungen 14 sind dabei im einfachsten Fall als Kanäle ausgeführt, die im ruhenden Bauteil 8 angeordnet sind und in die Arbeitskammer 15 münden. Die Arbeitskammer 15 wird durch die Beaufschlagungsfläche 12 sowie einer Innenwandung 16 im ruhenden Bauteil 8 begrenzt, wobei die Abdichtung gegenüber der Umgebung über Dichtelemente 17 erfolgt, welche den Kolben 5 gegenüber dem Innenumfang beziehungsweise der Innenwandung 16 abdichtet, wobei der Kolben 5 trotzdem in axialer Richtung verschiebbar ist. Das Rückstellsystem 11 umfasst eine sogenannte Rückstellkammer 18, die ebenfalls mit einer Druckmittelquelle 19 verbindbar ist, vorzugsweise verbunden ist. Im dargestellten Fall wird die Funktion der Druckmittelquelle 19 vom Schmiermittelsystem 3, insbesondere der Schmiermitteldruckquelle 21, welche über eine Schmiermittelversorgungsleitung 20 mit den Schmierstellen verbunden ist, gebildet. Die Rückstellkammer 18 wird dabei von einer Kolbenfläche 22, welche mit wenigstens einem Teilbereich 23 eine wirksame Rückstellfläche bildet und der Innenwandung 16 im ruhenden Gehäuse 8 gebildet. Die Innenwandung 16 des ruhenden Gehäuses wird dabei vorzugsweise von einer Ausnehmung 24 am ruhenden Gehäuse beziehungsweise runden Bauteil 8 gebildet. Die Ausnehmung 24 beziehungsweise Aussparung bildet dabei eine Kammer, in der der Kolben 5 bewegbar geführt ist. Im dargestellten Fall ist die Rückstellkammer 18 über eine Verbindungsleitung 25 mit einer Schmiermittelleitung 20 verbunden, wobei die Schmiermittelleitung 20 die Schmiermitteldruckquelle 21 mit den Schmierstellen I bis beispielhaft V verbindet. Der Kolben 5 wird durch den Schaltdruck, das heißt über das Druckmittelsystem 10, insbesondere die Druckmittelquelle 13, welche die Arbeitskammer 15 mit dem entsprechenden Druck pₛ beauftragt, geschaltet. Die Rückstellung erfolgt über den Schmierdruck, der sich über die Schmiermittelleitung 20 und die Verbindungsleitung 25 in der Rückstellkammer 18 aufbaut. Die Rückstellung erfolgt dabei selbsttätig bei Abbau des Schaltdruckes in der Arbeitskammer 15. Eine Betätigung des Kolbens 5 erfolgt nur dann, wenn die die Arbeitskammer 15 beaufschlagende Schaltkraft größer als die Kraft in der Rückstellkammer 18 ist. Bei Aktivierung des Kolbens 5, das heißt Beaufschlagung mit dem Schaltdruck, bewegt dieser sich in der dargestellten Ausführung nach links und das in der Rückstellkammer 18 befindliche Medium wird in die Schmiermittelleitung 20 gedrängt. Damit wird die in der Schmiermittelleitung 20 vorhandene Schmiermittelmenge erhöht beziehungsweise der Schmiermitteldruck. Zusätzlich können in den einzelnen Leitungssystemen, insbesondere der Verbindungsleitung 25 und/oder der Schmiermittelleitung 20, Drosseln 26 beziehungsweise 27 angeordnet werden.

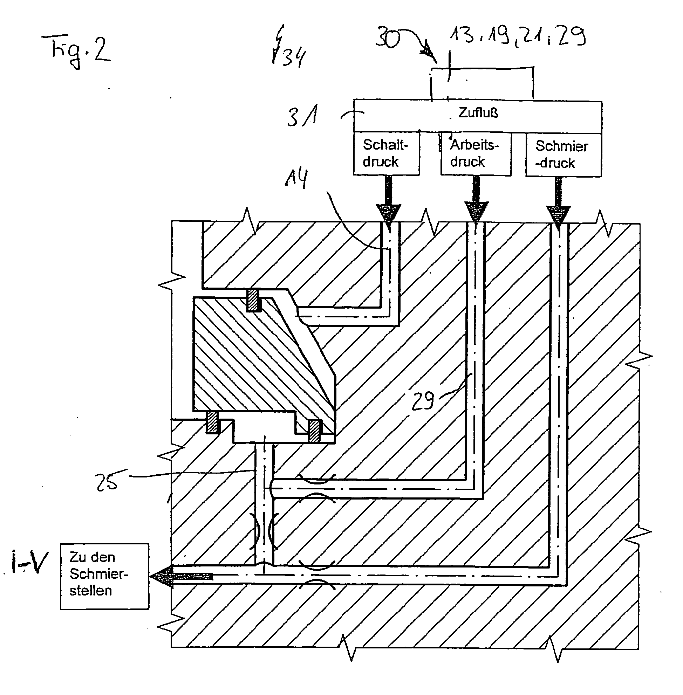

Verdeutlicht die Figur 1 das Grundprinzip der Anbindung eines druckmittelbetätigten Rückstellsystems 11 an das Schmiermittelsystem, zeigt Figur 2 eine Weiterentwicklung gemäß Figur 1. Bei dieser Ausführung ist zusätzlich eine Arbeitsdruckmittelquelle 28 vorgesehen, welche mit der Verbindungsleitung 25 gekoppelt ist. Die Arbeitsdruckmittelquelle 28, die Schaltdruckmittelquelle 13 sowie die Schmiermitteldruckquelle 21 werden dabei vorzugsweise von einer einzigen Betriebsmittelquelle 30 gebildet. Über entsprechende Mittel zur Aufteilung, welche hier mit 31 bezeichnet sind, erfolgt dann die Zuordnung zu den einzelnen Leitungssystemen, insbesondere zur Verbindungsleitung 14 mit der Arbeitskammer 15, zur Verbindungsleitung 29 mit der Verbindungsleitung 25 und der Schmiermittelleitung 26. Diese Lösung ist zur Unterstützung des Schmiermitteldruckes gedacht. Diese wird u.a. dann verwendet, wenn es je nach Betriebspunkt unterschiedliche Schmierdrücke geregelt beziehungsweise geschaltet werden müssen, für welche an den Schmierstellen I bis V aber ein möglichst gleiches Schmierdruckniveau aufrecht erhalten werden soll. Über die Arbeitsdruckmittelquelle 29, welche über eine Verbindungsleitung 29 mit der Verbindungsleitung 25 zwischen Rückstellkammer 18 und Schmiermittelleitung 26 gekoppelt ist, kann somit zusätzliches Druckmittel in die Verbindungsleitung 29 eingespeist werden. Auch in dieser Verbindungsleitung 29 kann eine Drossel vorgesehen sein.

Gemäß einer besonders vorteilhaften Ausführung kann der über die Arbeitsdruckmittelquelle 29 in das System eingebrachte Druck gesteuert werden. Dies kann über eine Steuer- und/oder Regeleinrichtung 32 erfolgen, welche beispielsweise von der Steuer- und/oder Regeleinrichtung des Getriebes gebildet wird, in dem das Schaltelement angeordnet ist.

Die erfindungsgemäße Lösung ist nicht auf die Ausführungen in den Figuren 1 und 2 beschränkt. Beide stellen jedoch besonders vorteilhafte Ausführungen dar. Bei dem Druckmittel kann es sich dabei um das Schmiermittel selbst handeln.

Bei der in Figur 2 dargestellten Lösung können die Funktionen der einzelnen Druckmittelquellen 13, 21, 19 sowie 29 auch von separaten Druckmittelquellen gebildet werden oder aber die Funktion von zwei oder mehreren wird in einer einzigen zusammengefasst, wobei dann die Steuerung des Druckes in den einzelnen Verbindungsleitungen über entsprechende Einrichtungen erfolgt, beispielsweise Druckregelventile etc.

### Bezugszeichenliste

- 1: Betätigungsvorrichtung
- 2: Schaltelement
- 3: Schmiermittelversorgungssystem
- 4: Betätigungselement
- 5: Kolben
- 6: Wirkfläche
- 7: Bauteil
- 8: rundes Bauteil
- 9: Betätigungseinrichtung
- 10: Druckmittelsystem
- 11: Rückstellsystem
- 12: Beaufschlagungsfläche
- 13: Druckmittelquelle
- 14: Leitungsverbindung
- 15: Arbeitskammer
- 16: Innenwand
- 17: Dichtelement
- 18: Rückstellkammer
- 19: Druckmittelquelle
- 20: Schmiermittelversorgungsleitung
- 21: Schmiermitteldruckquelle
- 22: Kolbenfläche
- 23: Rückstellfläche
- 24: Ausnehmung
- 25: Verbindungsleitung
- 26: Drossel
- 27: Drossel
- 28: Arbeitsdruckmittelquelle
- 29: Verbindungsleitung
- 30: Betriebsmittelquelle
- 31: Mittel
- 32: Steuer- und/oder Regeleinrichtung
- 34: Schaltsystem
- I - IV: Schmierstelle

## Patentansprüche

1. Schaltsystem (34)
1.1 mit mindestens einem Schaltelement (2) und einer diesem zugeordneten Betätigungsvorrichtung (1);
1.2 mit einem dem Schaltelement (2) zugeordneten Schmiermittelversorgungssystem (3);
1.3 die Betätigungsvorrichtung (1) umfasst mindestens ein Betätigungselement (4), welches mit Schaltdruck beaufschlagbar ist und ein druckmittelbetätigtes Rückstellsystem (11), umfassend mindestens eine Rückstellkammer (18) für das Betätigungselement (4);
**gekennzeichnet durch** das folgende Merkmal:
1.4 die Rückstellkammer (18) des Rückstellsystems (11) ist mit dem Schmiermittelversorgungssystem (3) verbunden.

2. Schaltsystem (34) nach Anspruch 1, **dadurch gekennzeichnet, dass** das Rückstellsystem (11) eine Druckmittelquelle (19) umfasst, die von der Schmiermitteldruckquelle (11) des Schmiermittelversorgungssystems (3) gebildet wird.

3. Schaltsystem (34) nach einem der Ansprüche 1 oder 2, **dadurch gekennzeichnet, dass** die Betätigungsvorrichtung (1) eine Druckmittelquelle (13) zur Erzeugung oder Bereitstellung des Schaltdruckes umfasst und Mittel zur Steuerung des Schaltdruckes.

4. Schaltsystem (34) nach Anspruch 3, **dadurch gekennzeichnet, dass** die Druckmittelquelle (13) zur Erzeugung oder Bereitstellung des Schaltdruckes und die Schmiermitteldruckquelle (21) von einer Druckmittelquelle gebildet werden, wobei dieser Mittel zur Aufteilung der einzelnen Drücke/Volumenströme auf die einzelnen Systeme des Schaltdrucksystem (34) zugeordnet sind.

5. Schaltsystem (34) nach einem der Ansprüche 1 bis 4, **dadurch gekennzeichnet, dass** die Verbindung der Rückstellkammer (18) des Rückstellsystems (11) mit dem Schmiermittelsystem (3) über wenigstens eine Verbindungsleitung (25) erfolgt, die mit einer Schmiermittelversorgungsleitung (20) verbunden ist.

6. Schaltsystem (34) nach einem der Ansprüche 1 bis 5, **dadurch gekennzeichnet, dass** den einzelnen Leitungen oder Kanälen des Schmiermittelversorgungssystems (3), der Betätigungsvorrichtung (1) und/oder dem Rückstellsystem (11) Mittel zur Änderung des Druckes zugeordnet sind.

7. Schaltsystem (34) nach einem der Ansprüche 1 bis 5, **dadurch gekennzeichnet, dass** dem Rückstellsystem (14) ein Unterstützungsdrucksystem vorgesehen ist, umfassend eine Arbeitsdruckmittelquelle (29), die mit der Verbindungsleitung (25) zwischen Rückstellkammer (18) des Rückstellsystems (11) und dem Schmiermittelversorgungssystem (3) gekoppelt ist.

8. Schaltsystem (34) nach Anspruch 7, **dadurch gekennzeichnet, dass** die Arbeitsdruckmittelquelle (29) von der Schaltdruckmittelquelle (13) und/oder der Schmiermitteldruckquelle (21) gebildet wird.

9. Schaltsystem (34) nach einem der Ansprüche 1 bis 8, **dadurch gekennzeichnet, dass** das Betätigungselement (4) als in axialer Richtung verschiebbarer Kolben (5) ausgeführt ist, der an einem ortsfesten oder rotierenden Element (8) in axialer Richtung verschiebbar gelagert ist unter Bildung der Arbeitskammer (15) und der Rückstellkammer (18), wobei die Arbeitskammer (15) mit der Schaltdruckquelle (13) und die Rückstellkammer (18) mit dem Schmiermittelvorsorgungssystem (3) verbunden ist.

10. Schaltsystem (34) nach einem der Ansprüche 5 bis 9, **dadurch gekennzeichnet, dass** die Kopplung der Rückstellkammer (18) mit der Schmiermittelversorgungsleitung (21) unmittelbar vor der ersten Schmierstelle (I - IV) im Schaltsystem (34) erfolgt.
